# EUROPEAN PATENT SPECIFICATION

(11) **EP 1 084 451 B1**
(45) Date of publication and mention of the grant of the patent: **16.06.2004**
(21) Application number: 98918785.1
(22) Date of filing: 27.04.1998
(51) Int. Cl.: G03B 31/02, G03B 21/32

(54) **METHOD OF MAKING MOTION PICTURE RELEASE-PRINT FILM**
VERFAHREN ZUR HERSTELLUNG EINES ABZIEHDRUCK-KINOFILMES
PROCEDE DE PRODUCTION D'UN FILM DE DIFFUSION D'OEUVRES CINEMATOGRAPHIQUES

(43) Date of publication of application: 21.03.2001
(73) Proprietor: Maxivision Cinema Technology, Los Angeles, CA 90046 (US)
(72) Inventor: GOODHILL, Dean, K., Los Angeles, CA 90046 (US); BEHRNS, Don, P., Los Angeles, CA 90066 (US)
(74) Representative: Lindner, Michael, Dipl.-Ing.
(86) International application number: PCT/US1998/008452
(87) International publication number: WO 1999/056175

(56) References cited:
- WO-A-93/12456
- US-A- 3 865 738
- US-A- 5 739 895
- US-A- 5 745 213
- "Prints made on Continuous Contact Printers-Exposed Areas for Picture and Audio" SMPTE JOURNAL., vol. 104, no. 5, May 1995, pages 350-352, XP000504537 US
- "Motion-Picture Prints-Projectable Image Area" SMPTE JOURNAL., vol. 102, no. 8, August 1993, pages 743-744, XP000384516 US

## Description

### Background of the Invention

The present invention relates to motion picture film and, more particularly, a method of making motion picture release-print film that provides an enhanced projected image and lower film consumption.

A motion picture system is e.g. disclosed in WO 93/12456 A1.

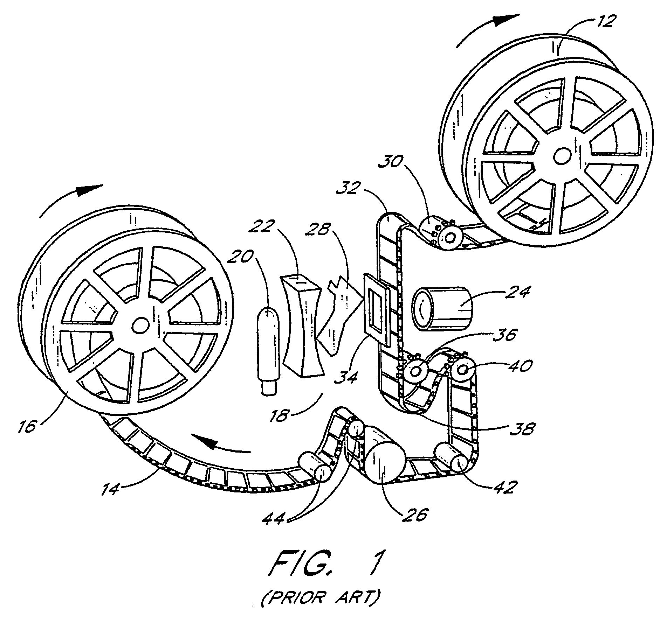

With reference to FIG. 1, a conventional motion picture projector uses reels 12 that supply the film 14 that goes into the projection system, and reels 16 that take up the film which has already been projected. A more recent design uses "platters" (large horizontal reels) that, on alternate ends, serve to both supply and take-up the film. Between the supply reel 12 and the take-up reel 16 lies an optical/mechanical device that actually projects the images that comprise what we call "motion pictures." This device is referred to as the projector head 18. Behind the head 18 is a lamp house 20 and a light-condenser 22, and in front of the head are lenses 24 that focus the "moving" image onto a projection screen. Below the head 18 are sound readers 26 that decode synchronized audio information which is then amplified and fed to speakers.

The term "motion pictures" is a description of an illusion - for the pictures do not actually move at all. To the contrary, the pictures (embodied in frames on the film projected at a rate of twenty-four times per-second) must be seen in as static a manner as possible in order to create the illusion of movement. The illusion is created by the gradual position differences from one film frame to the next. Between the exhibition of each of these static frames, all projected light is blocked by a rotating shutter 28 while succeeding frames are being "pulled down" into position. The viewing audience is unaware of these moments of darkness because of a perceptual phenomenon called "persistence of vision."

FIG. 1, as noted above, presents an illustration of a basic film projection system 10. In systems of this type, film is pulled off the supply reel 12, or off the supply rollers of a platter system, by a constant-speed sprocket 30. Then, a loop 32 is formed above a long metal frame called a gate 34, which exerts pressure on the edges of the film 14. This gate 34 grips the edges of the film 14 that surround the photographic image (embodied in each frame on the film) and holds them flat and straight. Through an intermittent movement mechanism, an intermittent sprocket 36 pulls the film 14 into the gate 34 and then stops it in precise registration. In this manner, the photographic image (frame) is positioned within a rectangular opening in the gate called an "aperture" placed in the optical axis between the lamp house/light-condenser 20 and 22 and the projection lens 24.

Below the gate 34, after the intermittent sprocket 36, there is another film loop 38 and a constant-speed sprocket 40. Then, on either side of the analog sound-reader 26, there are additional constant speed sprockets 42 and rollers 44 to ensure smooth audio. Theatrical projectors also require sound readers. Typically, the soundtrack on a film print containing both picture and sound (a "composite" print) is placed in a continuous, linear strip on the left side of the film image.

There are no frames whatsoever on new, unexposed motion picture print film. It's entire surface is evenly coated with light-sensitive emulsion. During the process of manufacturing the projection prints, the printing stock is placed in direct contact with a film negative, and then light is shown through the two contacting strips of film. This is called a "contact print." This exposes a latent image that appears when the film is developed, and thereby creates a "frame" on the print stock.

The use of the available film surface between the rows of perforations along the edges of the film has evolved through the years - first to allow space for sound, and later to accommodate the shift to "wide-screen" presentations. However, the size and use of the film itself has been standardized since 1889 when George Eastman is reported to have accepted an order for the first strip of celluloid film which was to be a 1-3/8" wide (35mm) with 64 perforations per foot (1 foot = 0,3 m). This remains the standard film size to this day. The length of the film pulled down into the aperture of the gate for each frame has also remained absolutely constant -- four perforations, twenty four times per second. This translates into exactly 90 feet per minute (27m/min) of film moved through the projector. Consequently, standard, theatrical 35mm film projectors are designed for so-called "four-perf pull down."

The term "aspect ratio" is used to define the ratio of the width to the height of each frame on the film. In the days of silent movies, the original full-aperture frame was used, and it had an aspect ratio of 1.33:1. When the sound era began, the layout of available projection print "real estate" was modified in order to physically make room for the soundtrack. The soundtrack is not laid down in a frame-by-frame basis since sound must be recorded and reproduced continuously, in contrast to the intermittent display used for the projection of photographic images. Thus, it was decided that the sound would be placed in a continuous strip to the left of the photographic images, which meant that these images (frames) had to be reduced in width to provide the necessary room. As a result, in order to maintain the 1.33 aspect ratio, the height of the frame also had to be reduced. This height reduction was accomplished by masking, which created a space between frames. This smaller space allotted to the projected image was called the "Academy" aspect ratio.

In the mid to late 1950s, various new theatrical projection formats (aspect ratios) appeared as a marketing response to television, which had adopted the 1.33:1 aspect ration long used in the movies. These new projection formats started with 3-D and included the Cinerama three-panel process, which used three cameras and three projectors locked together. Cinerama produced a very wide, clear image on the screen - three times wider and three times clearer - and it was quite popular. But some audiences disliked the seams where the three images joined together on the screen. Also, it was a relatively expensive process, both in terms of production and distribution. So the hunt was on to produce a wide screen image on a single projectable print.

One solution was found with cylindrical lenses, used in conjunction with standard spherical optics, to squeeze a wide image onto a single piece of 35mm film. These lenses precisely compress the photographic image laterally during photography and then precisely reverse that compression during projection. These so-called "anamorphic" lenses could optically squeeze a 2.35:1 aspect ratio into a 1.33:1, four-perforation frame, thus approximating the Cinerama aspect ratio. As this technology developed, these lenses were highly refined, reaching their zenith with the lenses manufactured by the Panavision Company.

These anamorphic systems are still in use to this day. However, there are still many inherent drawbacks to the anamorphic process, including limited photographic depth-of-field and large, heavy camera lenses. Further, some film makers feel that the 2.35:1 aspect ratio is simply too wide. Moreover, the anamorphic process results in an image that is so wide that much of it cannot be shown on television absent significant cropping of the image or presentation of the image in what has come to be known as a "letterbox."

Soon another method was found to project a wide screen image - one that was wider than the Academy frame that has been so identified with television, but not as wide as the ones produced by the anamorphic processes. In the late 1950's, the 1.85:1 aspect ratio was developed in order to provide the audience with a "semi-wide screen look" without having to resort to anamorphic camera and projection lenses, used for true wide screen presentation. Approximately 85% of the films currently in release use the non-anamorphic 1.85:1 format. To achieve the 1.85:1 aspect ratio, a mask is simply inserted into the aperture of the projection gate. This mask covers the top and bottom areas of the projection frame, thereby increasing the width to height ratio of the picture. Consequently, the exposed images in these masked areas are never seen.

The motion picture system disclosed in the aforementioned WO 93/12456 A1 e.g. uses the 1.85:1 aspect ratio film format.

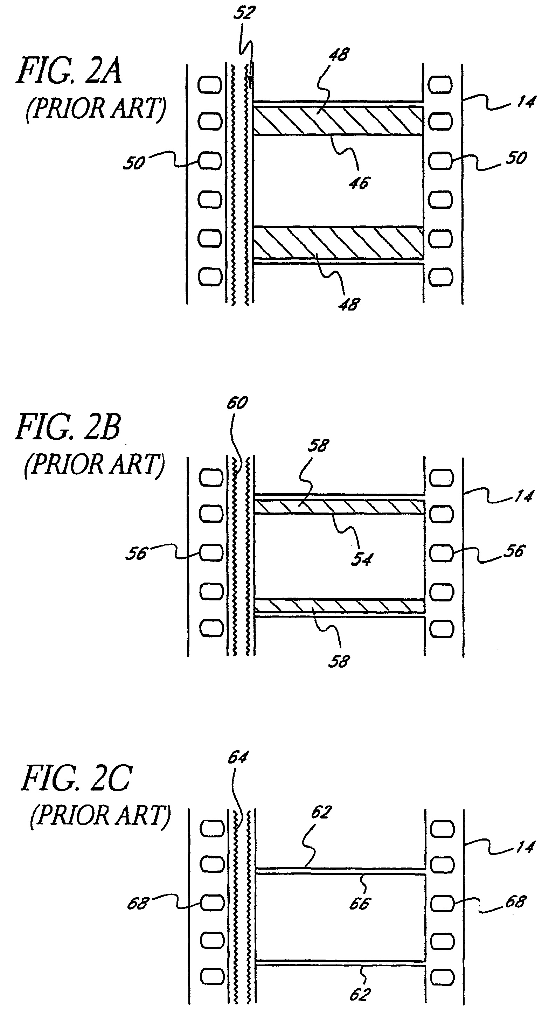

Unfortunately, the economic consequences associated with 1.85 format are considerable. The waste produced by this format accounts for 37.5% of all the space available on release prints and trailers. FIG. 2a shows film 14 having frames 46 in the 1.85:1 projection format. The cross-hatched area 48 represents the otherwise usable film area that is wasted in the 1.85:1 projection format with a frame height spanning four perforations 50 on the film 14. This format also employs an optical soundtrack on the left side of the film 14. The area represented by the reference numeral 52 corresponds to the area reserved for the optical soundtrack.

Some of the waste produced by the 1.85:1 projection format could be eliminated by changing to an alternate frame height standard that provides the same projectable area as shown in FIG. 2a, but without as much wasted picture area above and below the frame. One such alternate frame standard is the three-perforation frame shown in FIG. 2b. By eliminating some of the area previously wasted by masking, the same projectable area of the film 14 can be fitted into a space with a frame 54 that spans three perforations 56 instead of four. Consequently, elimination of this wasted area 58 results in a reduction in release print footage, and therefore cost, by 25%, even with an optical soundtrack 60. Considering the enormous quantity of release print footage that is generated annually, it is clear that very substantial savings could be achieved by switching over to three-perforation printing. A projector showing such three-perforation prints would use film at the rate of 20,25 m/min (67.5 feet-per-minute) instead of the standard 27 m/min (90 feet-per-minute), but it could still show exactly the same size 1.85:1 frames at exactly the same 24 frames-per-second. Hence, there would be no reduction in quality whatsoever.

While the three-perforation format is a step in the right direction, it is not the ultimate in film conservation, since there is still some wasted area at the top and bottom that must be masked during projection. FIG. 2c illustrates another alternate frame height for the 1.85:1 format in which there is even less wasted film area 62 on the film 14. The standard 1.85:1 format has an established picture width that is limited by the space reserved on the left side of the film for the optical soundtrack 64. This limiting width for the frame 66, together with the 1.85:1 aspect ratio, establishes the minimum frame height of 1,132 cm (0.446 inches). When a few thousandths of an inch are added for space between frames 66, this height corresponds to precisely 2.5 perforations 68 of film length. The 2.5-perforation pull down format represents a saving of about 37.5% when compared to the standard four-perforation format and is currently being proposed as an alternate industry release-print standard.

Although both the three-perforation format and the 2.5-perforation format help reduce film waste, neither one provides any enhancement in the quality or resolution of the projected image. This is because both formats simply rely on placing the standard 1.85:1 format frame into three or 2.5 perforations instead of the usual four perforations. In addition, both formats utilize optical soundtracks that occupy space on the left side of the film.

The nature of the images exhibited in theatrical motion picture theaters has changed a great deal since the four-perforation projection pull down was standardized in 1889. However, the basic specification of the projection pull-down has failed to evolve in response to these changes. The amount of film pulled into the projector's intermittent movement has remained constant: four perforations per frame. In order to understand the significance of the innovation disclosed herein, it must be understood that retaining the four-perforation projection movement, when used with the popular 1.85:1 format, wastes significant amounts of film (25% to 37.5%), without any enhancement in the quality of the projected image. The three-perforation format has never been widely accepted, and the 2.5-perforation format has only recently been suggested.

Accordingly, there has existed a definite need for a new method of exhibiting motion picture film that avoids film waste and that provides a projected image having enhanced quality and resolution as compared to the prior film formats. The present invention satisfies these needs and provides further related advantages.

### SUMMARY OF THE INVENTION

The present invention as defined in the claims provides a method of making motion picture release-print film that has an enhanced projected image with a minimum of film waste. The film has an enhanced projected image due to an increased frame size relative to prior film formats, while, at the same time, in one embodiment, significantly reducing the cost of production and distribution by reducing the quantity of film required for each print. Thus, at least one embodiment of the invention reconciles two conflicting parameters in film making -enhancing the projected film image and minimizing film waste. Both embodiments significantly increase the clarity and resolution of the projected image.

In accordance with the invention, the width of each film frame is expanded to fill the space defined by the distance between the perforations along the edges of the film, within specified limits. The soundtrack normally occupying a portion of this space is eliminated and replaced with other soundtrack means that do not occupy the space between the perforations available for the projected image. At the same time, the height of the film frame is expanded as much as possible to minimize the spacing between the frames.

The 1.85:1 aspect ratio is maintained in a three perforation format, but with a significantly enlarged frame size. The width of each frame is expanded such that it occupies substantially all of the space between the perforations that is available for the projected image. The height of the frame is then increased until the width-to-height (aspect) ratio of the frame equals 1.85:1. The result is a significantly enlarged frame that provides an enhanced projected image, due to the enlarged size of the frame, as compared to the prior art 1.85:1 projection formats having a smaller frame size. Yet, the frame only occupies slightly less than three perforations of film height. Consequently, the film can be exhibited at a rate of 67.5 feet-per-minute (20,25 m/min), at 24 frames-per-second. Importantly, film waste is minimized, while the enhancement of the projected image is maximized. Moreover, since the 1.85:1 aspect ratio is maintained, all of the advantages attendant to that aspect ratio, which is the predominan projection format in the United States and Canada, are maintained.

Hence, in both of the formats disclosed herein, the end result of the increase in image area is an improvement in the clarity of the image projected on the large screen, with minimum film waste. In addition, in the second embodiment, an aspect ratio of 2.0:1 has been established to be proposed as an alternate release print format which conveniently corresponds to the proposed broadcast format for the future High Definition TV.

Further features and advantages of the present invention will become apparent from the following detailed description, taken in conjunction with the accompanying drawings, which illustrate, by way of example, the principles of the invention.

### BRIEF DESCRIPTION OF THE DRAWINGS

FIG. 1 is an illustration of a basic film projection system of the prior art;
FIG. 2a is a section of film in a conventional layout of the prior art, having an aspect ratio of 1.85:1 in a four perforation format;
FIG. 2b is a section of film in another conventional layout of the prior art, having an aspect ratio of 1.85:1 in a three perforation format;
FIG. 2c is a section of film in yet another conventional layout of the prior art, having an aspect ratio of 1.85:1 in a 2.5 perforation format;
FIG. 3 is a section of film in a novel layout, embodying the features of the present invention, having an enlarged frame for an enhanced projected image, with an aspect ratio of 1.85:1 in a three-perforation format; and
FIG. 4 is a section of film in another novel layout not part of the present invention also having an enlarged frame for an enhanced projected image, with an aspect ratio of 2.0: 1 in a four perforation format.

### DETAILED DESCRIPTION OF THE PREFERRED EMBODIMENT

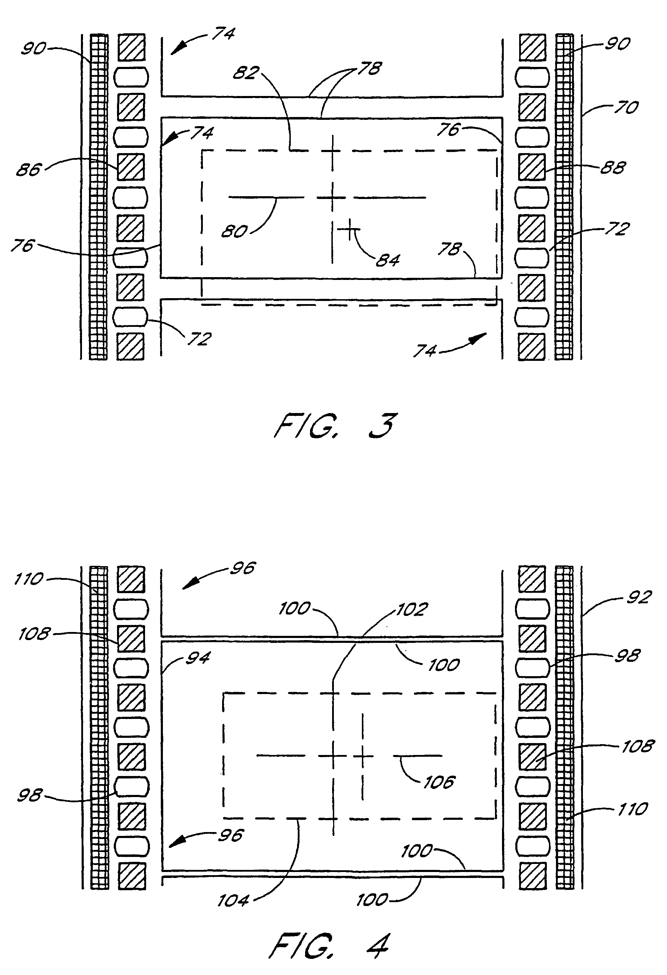

An embodiment of the present invention, which is referred to as "MaxiVision," is shown in FIG. 3. It comprises a strip of 35mm motion picture film 70 having its entire surface coated with a light sensitive emulsion. Two rows of perforations 72 extend along opposite edges of the film for engagement with the sprockets of a film projection system. Images are exposed onto the film, with the images being defined by a series of frames 74 having a significantly enlarged size.

In accordance with the invention, the height 76 of each frame 74 spans three perforations 72. This eliminates the wasted area between frames that currently exists in the 1.85:1/four-perforation projection format, as previously described in conjunction with FIG. 2a. As a result, the print film consumption and processing costs for MaxiVision are reduced by 25%, without sacrificing image size in any way. Furthermore, an increase in projectable image size is achieved by allowing the permissible image exposure area to extend, in frame width 76, to the full distance between the rows of perforations 72 (within specified limits) and, in height 76, from frame-line to frame-line, while maintaining a 1.85:1 aspect ratio.

A practical limit on the width of a frame has been essentially established by camera manufacturers, such as Panavision and Arriflex. The limit is 2,40 cm (0.945 inches), and this establishes the controlling width dimension 78 for the enlarged image of the present invention. By using the established aspect ratio of 1.85:1 and a frame width 78 of 2,40 cm (0.945 inches), the corresponding image height 78 of the frame 74 is 1,3 cm (0.51 inches). This allocation of space for each frame 74 is illustrated in FIG. 3. Since the longitudinal spacing between each perforation 72 is 0,48 cm (0.187 inches), there is a spacing between frames of only about 0,13 cm (0.05 inches) in this embodiment. The reference numeral 80 corresponds to the optical axis of the MaxiVision frame 74. For purposes of reference, the prior art frame 82 and its optical axis 84, in the 1.85:1 aspect ratio, are shown in dashed lines.

The MaxiVision format eliminates the analog optical soundtrack printed on the prior art release prints. In its place, the frame is expanded to the full 2,40 cm (0.945 inches) width. The end result of this reallocation of the available film exposure area is a 31.2% increase in projectable image area. This directly relates to an enhanced picture resolution by 31.2%, and a reduction in film consumption and processing costs by 25%.

Since the space on the film formerly set aside for the analog soundtrack is now being occupied by the enlarged frame 74, a different soundtrack is provided for the MaxiVision film. As explained below, the MaxiVision film 70 will eliminate the analog soundtrack entirely and replace it with redundant digital tracks or other appropriate soundtrack means.

In one form of the invention, the primary soundtrack will comprise a control track 86 located between the perforations 72 on either or both edges of the film 70. This control track 86 contains no audio information but, rather, generates a signal to be delivered, for example, to a CD ROM player. This signal enables the audio track to be played back in synchronization with the picture from a CD ROM recording. Such a system already exists (DTS), but it is not necessarily the system that will be employed in the MaxiVision film. One major advantage of using a control track-based system is the universality of the prints. For example, one standard print can be circulated worldwide by merely changing the accompanying CD ROM to the appropriate language version.

As a backup, the MaxiVision film may contain a redundant digital control track 88 which could control a separate by identical CD ROM system, with the redundant control track 88 located between the perforations 72 on the opposite side of the film 70. Alternately, the backup system could be a continuous digital track 90 running along the shoulder of the film 70 (which also may be redundant). One disadvantage of the latter approach, however, is that the backup dialogue is an integral part of the print and, therefore, the universality is somewhat diminished.

The MaxiVision film prints 70 can be manufactured using conventional contact printing processes, in which the picture is exposed on the print stock in a continuous contact film printing process. Both control track and digital audio are exposed in a separate operation. The film is subsequently developed to yield a composite (picture and sound) release print. In one embodiment, the printing negative that is used to expose the MaxiVision prints 70 can be derived directly from an interpositive print, which in turn is made by contact printing from the camera negative. This embodiment requires the use of a special camera that has been modified for three-perforation pull down and full aperture exposure. A special view finder ground glass is provided to enable the exposure of the additional negative area, and the lens mount must be shifted slightly to match the optical axis of the enlarged aperture. Cameras of this type area available from both Panavision and Arriflex, and it will be apparent to those skilled in the art how to modify the camera in a manner described above.

Alternatively, the printing negative may be derived by contact printing from a three-perforation interpositive that is a conversion print from a conventional four-perforation camera negative. In this case, the camera that is employed is a conventional movement, such as from a four-perforation camera negative to three-perforation interpositive which can be accomplished through the use of the Asynchronous Contact Printer for Motion_Picture Film disclosed in US-A-5,812,245 (application Serial No. 08/624,702 filed on March 26, 1996). This asynchronous contact printer has been designed specifically for this type of application. The printer is capable of making contact quality prints by converting four-perforation format film to three-perforation format film, or vice versa.

Theatrical protection of the MaxiVision release prints 70 will require a special projection system capable of three-perforation pull down. Such a system is provided by the Switchable Pulldown Film Projection System disclosed in US-A-5,946,076 (application Serial No. 08/598,033 filed on February 7, 1996). In addition, these projection systems must be capable of moving the projected image slightly to the right to compensate for the slight shift in the optical ax' of the enlarged aperture, as previously described.

A further system, not part of the present invention referred to as "Super MaxiVision," is shown in FIG. 4. The Super MaxiVision film 92 described below creates a presentation format which could establish a new theatrical projection format, while at the same time conform to the highly favored aspect ratio for High Definition TV as recommended by the American Society of Cinematographers and numerous other organizations.

The aspect ratio of the Super MaxiVision format film 92 would be 2.01:1 and would be achieved through the use of lateral anamorphic compression and expansion techniques. The height 94 of each frame 96 is expanded 35 such that it spans exactly four perforations 98, with virtually no spacing between the frames. This is a distance of 1,9 cm (0.748 inches) because the distance between each perforation 98 is 0,48 cm (0.187 inches)). Next, applying the desired aspect ratio of 2.0:1 an uncompressed frame width 100 of 3,8 cm (1.496 inches) is achieved. Since the maximum allowable "full aperture" frame width 100 on the film is 2,4 cm (0.945 inches), the compression ratio of the anamorphic camera lens must be 0.945/1.496, or 0.632. Conversely, the expansion ratio of the anamorphic projection lens would be the inverse of this, or 1.582. The reference numeral 102 corresponds to the optical axis of the Super MaxiVision frame 96. For purposes of reference, the prior art frame 104 and its optical axis 106, in a 1.85:1 aspect ratio, are shown in dashed lines.

In order to make use of the "full aperture" film width 100 described above, it is necessary to eliminate the conventional analog soundtrack and replace it with a redundant digital control tracks 108, redundant continuous digital tracks 110, or other appropriate soundtrack control means. The options available in this respect are the same as those presented above for the MaxiVision embodiment of this invention. Printing of release prints would be achieved through the conventional contact printing process, also previously discussed. The projection of Super MaxiVision prints 92 would require a projector equipped with the proper anamorphic lens, and with the capability of shifting the screen image and the optical axis of the lens. However, as discussed for the MaxiVision embodiment, this projection technology is readily available.

From the foregoing, it will be apparent that the present invention provides a method of making motion picture release-print film having an enhanced projected image with a minimum of film waste. Not only is the quality of the projected image and its resolution significantly improved over the prior art film formats, and in the case of MaxiVision, the cost of producing and distributing the release prints is substantially reduced. Thus, the present invention reconciles two conflicting parameters in film making - providing an enhanced projected image and minimizing film waste - in a manner that has never before been achieved.

While a particular form of the invention has been illustrated and described, it will be appreciated that various modifications can be made without departing from the invention as defined by the claims. Accordingly, it is not intended that the invention be limited, except as by the appended claims.

## Claims

1. A method of making enhanced resolution motion picture release-print film (70), comprising:
providing a strip of motion picture film (70) with a light-sensitive emulsion, wherein the film (70) has two rows of perforations (72) extending along opposite edges of the film (70) for engagement with sprockets (30, 36) of a motion picture film projector (10); **characterized by** the steps of:
exposing images onto an area of the film (70), wherein the area occupied by each image is defined by a frame (74) having a width (78) greater than the standard 1.85:1 format's width of approximately 2.096 cm (0.825 inches) and limited to 2.40 cm (0.945 inches), substantially occupying the available space between the rows of perforations (72), including space ordinarily occupied by a conventional analog soundtrack (52, 60, 64), and wherein its height (76) spans approximately three perforations (72) or less, providing a printed aspect ratio of substantially 1.85:1; and
placing audio information (86, 88, 90) on the film (70), other than a conventional analog soundtrack (52, 60, 64), that coordinates sound with the images when projected by the motion picture film projector (10), wherein the audio information substantially does not occupy any of said area available for the exposure of each image.

2. The method of Claim 1, wherein the width (78) of each frame (74) is approximately 2.40 cm (0.945 inches) and the height (76) of each frame (74) is approximately 1.30 cm (0.51 inches).

3. Motion picture release-print film (70) having enhanced resolution, comprising:
a strip of motion picture film (70) having two rows of perforations (72) extending along opposite edges of the film (70) for engagement with sprockets (30, 36) of a motion picture film projector (10); **characterized by**,
a plurality of projectable images on an area of the film (70), wherein the area occupied by each image is defined by a frame (74) having a width (78) greater than the standard 1.85:1 format's width of approximately 2.096 cm (0.825 inches) and limited to 2.40 cm (0.945 inches), substantially occupying the available space between the rows of perforations (72), including space ordinarily occupied by a conventional analog soundtrack (52, 60, 64), and its height (76) spanning approximately three perforations (72) or less, providing a printed aspect ratio of substantially 1.85:1; and
audio information (86, 88, 90) on the film (70), other than a conventional analog soundtrack (52, 60, 64), that coordinates sound with the images when projected by the motion picture film projector (10) , wherein the audio information substantially does not occupy any of said area available for the exposure of each image.

4. The motion picture film (70) of Claim 3, wherein the audio information comprises digital soundtrack (90), including a control track (86) placed on the film (70) outside the frames (74) that controls operation of a CD ROM player to produce audio in synchronization with the images on the film (70).

5. The motion picture film (70) of claim 4, wherein the digital soundtrack (90) is redundant to provide redundant digital audio.

6. The motion picture film (70) of Claim 5, wherein one control track (86) is placed on the film (70) between the perforations (72) along one edge of the film (70), and another redundant control track (86) is placed on the film (70) between the perforations (72) along the opposite edge of the film (70).

7. The motion picture film (70) of Claim 3, wherein the width (78) of each frame (74) is approximately 2.40 cm (0.945 inches) and the height (76) of each frame (74) is approximately 1.30 cm (0.51 inches).

8. The motion picture film (70) of Claim 3, wherein the spacing between frames (74) is approximately 0.13 cm (0.05 inches).

## Patentansprüche

1. Verfahren zur Erstellung eines Abziehdruck-Kinofilms mit erhöhter Auflösung (70), mit:
Bereitstellen eines Streifens eines Kino-Films (70) mit einer lichtempfindlichen Emulsion, wobei der Film (70) zwei Perforations-Reihen (72) besitzt, die sich entlang gegenüberliegender Ränder des Films (70) für ein Zusammenwirken mit Transporttrommeln (30), (36) eines Kinofilmprojektors (10) erstrecken; **gekennzeichnet durch** die Schritte:
Belichten von Bildern auf ein Gebiet des Films (70), wobei das Gebiet, das von jedem Bild belegt wird, **durch** einen Rahmen definiert ist, der eine Breite (78) größer als das Standard 1,85:1 Breitenformat von etwa 2,096 cm (0,825 Inches) und begrenzt auf 2,40 cm (0,945 Inches) ist, im Wesentlichen den verfügbaren Platz zwischen den Perforations-Reihen (72) belegt, einschließlich des Platzes, der üblicherweise von einer herkömmlichen analogen Tonspur (52, 60, 64) belegt wird, und wobei dessen Höhen (76) im Wesentlichen drei Perforationen (72) oder weniger überspannt, und damit ein belichtetes Seitenverhältnis von im Wesentlichen 1,85:1 liefert; und
Platzieren von Audioinformationen (86, 88, 90) auf dem Film (70) anders als eine herkömmliche analoge Tonspur (52, 60, 64), die den Ton mit den Bildern beim Projizieren **durch** den Kinofilmprojektor (10) koordiniert, wobei die Audioinformation im Wesentlichen nicht das Gebiet belegt, das für die Belichtung eines Bildes zur Verfügung steht.

2. Verfahren nach Anspruch 1, wobei die Breite (78) jedes Rahmens (74) im Wesentlichen 2,40 cm (0,945 Inches) ist, und die Höhe (76) jedes Rahmens (74) im Wesentlichen 1,30 cm (0,51 Inches) beträgt.

3. Abziehdruck-Kinofilm (70) mit erhöhter Auflösung, aufweisend:
einen Streifen eines Kinofilms (70) mit zwei Perforationsreihen (72), die sich entlang gegenüberliegender Ränder des Films (70) zum Zusammenwirken mit Transporttrommeln (30, 36) eines Kinofilmprojektors (10) erstrecken; **gekennzeichnet durch**:
eine Vielzahl von projizierbaren Bildern auf einem Gebiet des Films (70), wobei das Gebiet, das von jedem Bild belegt ist, **durch** einen Rahmen (74) mit einer Breite (78) größer als die Standard 1,85:1 Format-Breite von etwa 2,096 cm (0,825 Inches) und begrenzt auf 2,40 cm (0,945 Inches) definiert ist, im Wesentlichen den verfügbaren Platz zwischen den Perforationsreihen (72) belegt, einschließlich des Platzes, der üblicherweise von einer herkömmlichen analogen Tonspur (52, 60, 64) belegt ist, und dessen Höhe (76) im Wesentlichen drei Perforationen (72) oder weniger überspannt, und damit ein belichtetes Seitenverhältnis von im Wesentlichen 1,85:1 liefert; und
eine Audioinformation (86, 88, 90) auf dem Film (70) anders als eine herkömmliche Tonspur (52, 60, 64), die den Ton mit den Bildern bei der Projektion **durch** den Kinofilm-Projektor (10) koordiniert, wobei die Audioinformation im Wesentlichen nicht das für die Belichtung eines Bildes verfügbare Gebiet belegt.

4. Kinofilm (70) nach Anspruch 3, wobei die Audioinformation eine digitale Tonspur (90) aufweist, die eine auf dem Film (70) außerhalb der Rahmen (74) platzierte Steuerspur (86) umfasst, die den Betrieb eines CD-Rom-Spielers steuert, um den Ton mit den Bildern auf dem Film (70) zu synchronisieren.

5. Kinofilm (70) nach Anspruch 4, wobei die digitale Tonspur (90) redundant ist, um redundantes digitales Audio bereitzustellen.

6. Kinofilm (70) nach Anspruch 5, wobei eine Steuerspur (86) auf dem Film (70) zwischen den Perforationen (72) entlang eines Randes des Films (70) platziert ist, und eine redundante Steuerspur (86) auf dem Film (70) zwischen der Perforation (72) entlang dem gegenüberliegenden Rand des Films (70) angeordnet ist.

7. Kinofilm (70) nach Anspruch 3, wobei die Breite (78) jedes Rahmens (74) im Wesentlichen 2,40 cm (0,945 Inches) und die Höhe (76) jedes Rahmens (74) im Wesentlichen 1,30 cm (0,51 Inches) beträgt.

8. Kinofilm (70) nach Anspruch 3, wobei der Abstand zwischen den Rahmen (74) im Wesentlichen 0,13 cm (0,05 Inches) beträgt.

## Revendications

1. Procédé de fabrication d'une pellicule cinématographique à résolution améliorée et à tirage de série (70), comprenant :
la fourniture d'une bande de pellicule cinématographique (70) avec une émulsion sensible à la lumière, dans laquelle la pellicule (70) possède deux rangées de perforations (72) s'étendant le long des côtés opposés de la pellicule (70) en vue de l'engagement avec des pignons (30, 36) d'un projecteur de pellicule cinématographique (10) ; **caractérisé par** les étapes :
d'exposition des images sur une zone de la pellicule (70), dans laquelle la zone occupée par chaque image est définie par un cadre (74) possédant une largeur (78) supérieure à la largeur du format standard 1:85:1 d'environ 2,096 cm (0,825 pouce) et limitée à 2,40 cm (0,945 pouce), occupant sensiblement l'espace disponible entre les rangées de perforations (72), comprenant un espace ordinairement occupé par une bande son analogique conventionnelle (52, 60, 64), et dans laquelle sa hauteur (76) s'étend sur environ trois perforations (72) ou moins, fournissant un rapport de format imprimé de 1;85:1 sensiblement ; et
de placement d'informations audio (86, 88, 90) sur la pellicule (70), autres qu'une bande son analogique conventionnelle (52, 60, 64), qui coordonnent le son avec les images lorsqu'elles sont projetées par le projecteur de pellicule cinématographique (10), dans lequel les informations audio n'occupent sensiblement pas l'une quelconque de ladite zone disponible pour l'exposition de chaque image.

2. Procédé selon la revendication 1, dans lequel la largeur (78) de chaque cadre (74) est d'environ 2,40 cm (0,945 pouce) et la hauteur (76) de chaque cadre (74) est d'environ 1,30 cm (0,51 pouce).

3. Pellicule cinématographique à tirage de série (70) possédant une résolution améliorée, comprenant :
une bande de pellicule cinématographique (70) possédant deux rangées de perforations (72) s'étendant le long des côtés opposés de la pellicule (70) en vue de l'engagement avec les pignons (30, 36) d'un projecteur de pellicule cinématographique (10) ; **caractérisée par**,
une pluralité d'images projetables sur une zone de la pellicule (70), dans laquelle la zone occupée par chaque image est définie par un cadre (74) possédant une largeur (78) supérieure à la largeur du format standard 1;85:1 d'environ 2,096 cm (0,825 pouce) et limitée à 2,40 cm (0,945 pouce), occupant sensiblement l'espace disponible entre les rangées de perforations (72), comprenant un espace ordinairement occupé par une bande son analogique conventionnelle (52, 60, 64), et sa hauteur (76) s'étendant environ sur trois perforations (72) ou moins, fournissant un rapport de format imprimé de 1;85:1 sensiblement ; et
des informations audio (86, 88, 90) sur la pellicule (70), autres qu'une bande son analogique conventionnelle (52, 60, 64), qui coordonnent le son avec l'image lorsqu'elle est projetée par le projecteur de pellicule cinématographique (10), dans laquelle les informations audio n'occupent sensiblement pas l'une quelconque de ladite zone disponible pour l'exposition de chaque image.

4. Pellicule cinématographique (70) selon la revendication 3, dans laquelle les informations audio comprennent une bande son numérique (90), comprenant une piste de contrôle (86) placée sur la pellicule (70) à l'extérieur des cadres (74) qui contrôle le fonctionnement d'un lecteur de CD-ROM afin de produire de l'audio en synchronisation avec les images sur la pellicule (70).

5. Pellicule cinématographique (70) selon la revendication 4, dans laquelle la bande son numérique (90) est redondante afin de fournir de l'audio numérique redondant.

6. Pellicule cinématographique (70) selon la revendication 5, dans laquelle une piste de contrôle (86) est placée sur la pellicule (70) entre les perforations (72) le long d'un bord de la pellicule (70), et dans laquelle une autre piste de contrôle redondant (86) est placée sur la pellicule (70) entre les perforations (72) le long du bord opposé de la pellicule (70).

7. Pellicule cinématographique (70) selon la revendication 3, dans laquelle la largeur (78) de chaque cadre (74) est d'environ 2,40 cm (0,945 pouce) et la hauteur (76) de chaque cadre (74) est d'environ 1,30 cm (0,51 pouce).

8. Pellicule cinématographique (70) selon la revendication 3, dans laquelle l'espacement entre les cadres (74) est d'environ 0,13 cm (0,05 pouce).
